# EUROPÄISCHE PATENTSCHRIFT

(11) **EP 4 098 344 B1**
(45) Veröffentlichungstag und Bekanntmachung des Hinweises auf die Patenterteilung: **03.07.2024**
(21) Anmeldenummer: 22174725.6
(22) Anmeldetag: 23.05.2022
(51) Int. Cl.: B01D 29/15, B01D 35/027

(54) **FILTEREINRICHTUNG MIT FILTERELEMENT**
FILTER DEVICE WITH FILTER ELEMENT
DISPOSITIF FILTRE POURVU D'ÉLÉMENT FILTRE

(30) Priorität: 04.06.2021 DE 102021205676
(43) Veröffentlichungstag der Anmeldung: 07.12.2022
(73) Patentinhaber: Filtration Group GmbH, 74613 Öhringen (DE)
(72) Erfinder: BAUTZ, Marco, 75015 Bretten (DE)
(74) Vertreter: BRP Renaud & Partner mbB Rechtsanwälte Patentanwälte Steuerberater

(56) Entgegenhaltungen:
- DE-A1-102013 216 853
- US-A1- 2009 057 213
- US-A1- 2012 228 209
- US-A1- 2013 232 929

## Beschreibung

Die vorliegende Erfindung betrifft eine Filtereinrichtung zum Filtern einer Flüssigkeit gemäß dem Oberbegriff des Anspruchs 1. Die Erfindung betrifft außerdem eine Verwendung eines Filterelements in einer derartigen Filtereinrichtung. Schließlich betrifft die Erfindung einen mit einer solchen Filtereinrichtung ausgestatteten Tank.

Eine gattungsgemäße Filtereinrichtung, die beispielsweise zum Filtern von Kraftstoff für eine Brennkraftmaschine, insbesondere eines Fahrzeugs, verwendet werden kann, ist z.B. aus der US 2009/0 057 213 A1 bekannt und weist ein Gehäuse auf, das einen zylindrischen Filteraufnahmeraum, einen Einlass für ungefilterte Flüssigkeit und einen Auslass für gefilterte Flüssigkeit aufweist. Des Weiteren weist die Filtereinrichtung ein Filterelement auf, das austauschbar in den Filteraufnahmeraum eingesetzt ist und darin eine mit dem Einlass fluidisch verbundene Rohseite von einer mit dem Auslass verbundenen Reinseite trennt. Außerdem ist die Filtereinrichtung üblicherweise mit einem Deckel ausgestattet, der am Gehäuse lösbar befestigt ist und der den Filteraufnahmeraum axial verschließt. Zweckmäßig kann das Filterelement als Ringfilterelement ausgestaltet sein, sodass es einen hohlzylindrischen Filterkörper aufweist, der einen zur Reinseite gehörenden Filterinnenraum umschließt und der ein von der zu filternden Flüssigkeit durchströmbares Filtermaterial aufweist. Der zylindrische Filterkörper definiert dabei eine Längsmittelachse für den Filterkörper und für das ringförmige Filterelement. Ferner weist das Filterelement eine erste Endscheibe auf, die an einem dem Deckel zugewandten ersten Axialende des Filterkörpers angeordnet ist. Außerdem weist das Filterelement eine zweite Endscheibe auf, die an einem vom Deckel abgewandten zweiten Axialende des Filterkörpers angeordnet ist. Die Endscheiben verschließen das jeweilige Axialende des Filterkörpers. Die erste Endscheibe ist als offene Endscheibe ausgestaltet, sodass sie eine axiale Scheibenöffnung aufweist, die zum Filterinnenraum offen ist. Der Auslass ist dann durch die Scheibenöffnung hindurch fluidisch mit dem Filterinnenraum verbunden.

Bei der aus der US 2009/0 057 213 A1 bekannten Filtereinrichtung ist die Scheibenöffnung, die sich an der ersten Endscheibe befindet, zentrische zur Längsmittelachse des Filterelements angeordnet.

Eine weitere Filtereinrichtung dieser Art ist aus der US 2012/0 228 209 A1 bekannt.

Aus der DE 10 2019 101 944 A1 ist eine ähnliche Filtereinrichtung bekannt, bei der das Filterelement bezüglich der Längsmittelachse des Filterelements exzentrisch im Filteraufnahmeraum angeordnet sein kann, derart, dass ein im Filteraufnahmeraum radial zwischen dem Filterkörper und dem Gehäuse ausgebildeter Ringraum eine radial gemessene Breite aufweist, die auf einer dem Einlass zugewandten Seite am größten ist und in Umfangsrichtung bis zur gegenüberliegenden Seite abnimmt, die dem Auslass zugewandt ist. Hierdurch können anströmseitig ein Strömungswiderstand und folglich ein Druckabfall am Filterkörper verringert werden.

Aus der EP 1 728 541 B1 ist eine Filtereinrichtung bekannt, bei der das Filterelement an einer Endscheibe eine Scheibenöffnung aufweist, die bezüglich der Längsmittelachse des Filterelements exzentrisch angeordnet ist, um eine spezielle Anschlusssituation am Gehäuse zu ermöglichen.

Aus der DE 10 2015 014 728 A1 ist eine weitere Filtereinrichtung bekannt, bei der das Filterelement an einer Endscheibe eine exzentrische Scheibenöffnung aufweist, um einen speziellen Aufbau des Filterelements mit besonderer Durchströmungssituation zu ermöglichen.

Bei einer Filtereinrichtung, bei welcher der Deckel eine radiale Deckelöffnung aufweist, durch die hindurch der Auslass fluidisch mit der Reinseite verbunden ist, erfolgt im Deckel zwischen der Scheibenöffnung und der Deckelöffnung eine 90°-Umlenkung der Flüssigkeit. In der axialen Scheibenöffnung strömt die Flüssigkeit im Wesentlichen parallel zu einer Mittelachse der Scheibenöffnung, die parallel zur Längsmittelachse des Filterkörpers, also axial ausgerichtet ist. Im Unterschied dazu strömt die Flüssigkeit in der radialen Deckelöffnung im Wesentlichen parallel zu einer Mittelachse der Deckelöffnung, die senkrecht zur Axialrichtung und insbesondere radial zur Längsmittelachse des Filterkörpers ausgerichtet ist. Eine derartige Strömungsumlenkung um etwa 90° führt zu einer inhomogenen Verteilung der Strömungsgeschwindigkeit und ist mit einem vergleichsweise hohen Strömungswiderstand verbunden, was die Effizienz der Filtereinrichtung reduziert.

Die vorliegende Erfindung beschäftigt sich mit dem Problem, für eine derartige Filtereinrichtung bzw. für ein dafür vorgesehenes Filterelement bzw. für einen damit ausgestatteten Tank eine verbesserte Ausführungsform anzugeben, die sich insbesondere durch eine erhöhte Effizienz und/oder durch einen reduzierten Durchströmungswiderstand auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Scheibenöffnung bezüglich der Längsmittelachse des Filterkörpers exzentrisch an der ersten Endscheibe anzuordnen. Mit anderen Worten, die Scheibenöffnung wird an der ersten Endscheibe außermittig angeordnet, sodass ein Abstand zwischen einer Mittelachse der Scheibenöffnung und der Längsmittelachse des Filterkörpers vorhanden ist. Dieser Abstand wird auch als Exzentrizität bezeichnet und beträgt mindestens 5 %, vorzugsweise mindestens 10 %, insbesondere mindestens 20 %, und maximal 30% eines Durchmessers der Scheibenöffnung, die zweckmäßig kreisförmig ausgestaltet sein kann. Durch die exzentrisch angeordnete Scheibenöffnung lassen sich die Radien, mit denen die 90°-Strömungsumlenkung im Deckel erfolgt, beeinflussen. Hierdurch lässt sich insbesondere eine Homogenisierung der Strömungsgeschwindigkeiten in der 90°-Umlenkung realisieren, was abströmseitig den Durchströmungswiderstand reduziert bzw. die Effizienz der Filtereinrichtung verbessert.

Erfindungsgemäß ist die Scheibenöffnung von der Deckelöffnung weggerichtet zur Längsmittelachse des Filterkörpers versetzt an der ersten Endscheibe angeordnet. Mit anderen Worten, die Scheibenöffnung ist an der ersten Endscheibe derart exzentrisch angeordnet, dass die Längsmittelachse des Filterkörpers geometrisch zwischen der Deckelöffnung und der Mittelachse der Scheibenöffnung angeordnet ist. Wie erwähnt, erstreckt sich die Mittelachse der Scheibenöffnung zweckmäßig parallel zur Längsmittelachse des Filterkörpers, ist dazu jedoch versetzt, also mit Abstand angeordnet. Durch den Versatz der Scheibenöffnung weg von der Deckelöffnung wird der mittlere Radius für die 90°-Umlenkung im Deckel größer, was die Strömung homogenisiert und den Durchströmungswiderstand reduziert.

Besonders vorteilhaft ist eine Ausführungsform, bei welcher eine Mittelachse der Deckelöffnung die Längsmittelachse des Filterkörpers schneidet. Mit anderen Worten, die Deckelöffnung ist am Deckel so angeordnet, dass ihre Mittelachse radial zur Längsmittelachse des Filterkörpers verläuft. Die Positionierung der Scheibenöffnung an der ersten Endscheibe kann zweckmäßig so erfolgen, dass eine Verbindungsgerade, die durch die Längsmittelachse des Filterkörpers und durch die Mittelachse der Scheibenöffnung geht, gegenüber der Mittelachse der Deckelöffnung einen Exzenterwinkel aufweist, der ≤ 30° ist. Insbesondere kann der Exzenterwinkel ≤ 20° und vorzugsweise ≤ 10° und insbesondere ≤ 5° sein. Besonders vorteilhaft ist eine Ausführungsform, bei welcher der Exzenterwinkel im Wesentlichen null Grad ist, also etwa = 0° ist, sodass die Verbindungsgerade mit der Mittelachse im Wesentlichen zusammenfällt. Durch diese Positionierung der Scheibenöffnung an der ersten Endscheibe lassen sich besonders große Radien für die 90°-Umlenkung realisieren, was die Reduzierung des Durchströmungswiderstands begünstigt.

Eine andere vorteilhafte Ausführungsform schlägt vor, dass an der ersten Endscheibe eine Ausrichtkontur ausgebildet ist und dass der Deckel ein Ausrichtelement aufweist, das mit der Ausrichtkontur in Eingriff steht und das das Filterelement koaxial zum Deckel ausrichtet. Durch die koaxiale Ausrichtung von Filterelement und Deckel fallen die Längsmittelachse des Filterkörpers und die Längsmittelachse des Deckels zusammen.

Ausrichtkontur und Ausrichtelement sind außerdem so ausgestaltet und/oder angeordnet, dass das Ausrichtelement durch seinen Eingriff mit der Ausrichtkontur gleichzeitig eine Ausrichtung des Filterelements gegenüber dem Deckel in Umfangsrichtung bewirkt, dahingehend, dass die Scheibenöffnung bezüglich der Deckelöffnung eine vorbestimmte Drehlage bzw. Relativlage aufweist. Erreicht wird dies insbesondere durch eine bezüglich der Längsmittelachse des Filterkörpers exzentrische Anordnung der Ausrichtkontur an der ersten Endscheibe in Verbindung mit einem bezüglich der Längsmittelachse des Deckels exzentrisch angeordneten Ausrichtelement. Durch die koaxiale Ausrichtung zwischen Filterelement und Deckel wird dabei gleichzeitig die vorbestimmte Drehlage zwischen Deckelöffnung und Scheibenöffnung eingestellt.

Gemäß einer vorteilhaften Weiterbildung kann daher vorgesehen sein, dass die Ausrichtkontur bezüglich der Längsmittelachse des Filterkörpers exzentrisch an der ersten Endscheibe ausgebildet ist und dass das Ausrichtelement bezüglich einer Längsmittelachse des Deckels exzentrisch am Deckel ausgebildet ist, sodass das mit der Ausrichtkontur in Eingriff stehende Ausrichtelement eine vorbestimmte Drehlage zwischen Deckelöffnung und Scheibenöffnung einstellt.

Zweckmäßig kann die Ausrichtkontur integral an der ersten Endscheibe ausgeformt sein, was eine preiswerte Herstellung bei engen Fertigungstoleranzen ermöglicht. Zweckmäßig kann das Ausrichtelement integral am Deckel ausgeformt sein. Hierdurch reduzieren sich die Herstellungskosten, während gleichzeitig vergleichsweise enge Fertigungstoleranzen realisierbar sind.

Eine andere vorteilhafte Ausführungsform schlägt vor, dass die Ausrichtkontur an einem die Scheibenöffnung einfassenden Öffnungsrand ausgebildet ist. Das Ausrichtelement greift zum Ausrichten des Filterelements in die Scheibenöffnung ein. In diesem Fall sind die Exzentrizität der Ausrichtkontur und der Scheibenöffnung gleich groß. Außerdem ist die Exzentrizität des Ausrichtelements gleich derjenigen der Ausrichtkontur. Durch den Eingriff des Ausrichtelements in die Ausrichtkontur bzw. in die Scheibenöffnung wird durch die koaxiale Ausrichtung zwischen Filterelement und Deckel zwangsläufig auch die gewünschte Drehlage zwischen Deckelöffnung und Scheibenöffnung eingestellt. Durch die Integration der Ausrichtkontur in die Scheibenöffnung wird dies vereinfacht.

Gemäß einer anderen Ausführungsform kann die erste Endscheibe einen die Scheibenöffnung einfassenden Innenkragen aufweisen, an dem die Ausrichtkontur ausgebildet ist. Durch den Innenkragen wird Bauraum für die Ausrichtkontur bereitgestellt, wodurch diese eine erhöhte Funktionssicherheit besitzt.

Gemäß einer Weiterbildung kann der Innenkragen von der ersten Endscheibe zum Filterinnenraum hin abstehen und über radial verlaufende Stege, die ebenfalls an der ersten Endscheibe ausgebildet sind, an einem Außenkragen befestigt und abgestützt sein, der ebenfalls an der ersten Endscheibe ausgebildet ist und an dem sich der Filterkörper radial abstützt. Hierdurch erhält die erste Endscheibe im Bereich des Innenkragens und somit im Bereich der Ausrichtkontur eine besonders hohe Steifigkeit, was die Funktionalität der Ausrichtung zwischen Deckel und Filterelement unterstützt. Zweckmäßig sind der Innenkragen, die Stege und der Außenkragen integral an der ersten Endscheibe ausgeformt.

Eine andere vorteilhafte Ausführungsform schlägt vor, dass die Ausrichtkontur wenigstens eine axial verlaufende Nut aufweist, die an der ersten Endscheide ausgebildet ist. Bevorzugt sind mehrere axial verlaufende Nuten vorgesehen, die entlang der Scheibenöffnung in der Umfangsrichtung verteilt an der ersten Endscheibe ausgebildet sind. Das Ausrichtelement dementsprechend zumindest einen Ausrichtfinger aufweisen, der in die jeweilige Nut eingreift. Sofern mehrere Nuten vorgesehen sind, weist das Ausrichtelement mehrere Ausrichtfinger auf, die jeweils in eine der Nuten eingreifen. Die Anzahl der Nuten stimmt zweckmäßig mit der Anzahl der Ausrichtfinger überein. Beispielsweise können ein, zwei oder drei oder mehr Nuten und Ausrichtfinger vorgesehen sein. Die Nut bzw. die Nuten der Ausrichtkontur können am Öffnungsrand oder am Innenkragen ausgeformt sein. Grundsätzlich können die Nuten in der Umfangsrichtung gleichförmig bzw. symmetrisch entlang der Scheibenöffnung verteilt sein. Ebenso ist eine asymmetrische bzw. ungleichförmige Verteilung denkbar.

Eine besonders vorteilhafte Weiterbildung schlägt vor, dass der jeweilige Ausrichtfinger als Rastelement ausgebildet ist und an seinem freistehenden Ende eine Rastnase aufweist. Der als Rastelement ausgebildete Ausrichtfinger zeichnet sich dadurch aus, dass er zumindest im Bereich der Rastnase radial federelastisch ist. Der Deckel ist nun durch das mit der ersten Endscheibe verrastete Ausrichtelement mit dem Filterelement mechanisch verbunden, sodass beim Abziehen des Deckels vom Gehäuse das Filterelement aus dem Filteraufnahmeraum herausgezogen wird. Dies vereinfacht die Handhabung der Filtereinrichtung beim Wechseln des Filterelements.

Bei einer anderen Ausführungsform kann der Deckel einen zylindrischen Mantel aufweisen, der die Deckelöffnung aufweist und der in das Gehäuse eintaucht. Die erste Endscheibe kann nun ihrerseits koaxial in den Mantel eintauchen. Auch kann die erste Endscheibe an ihrem Außenumfang eine radial wirkende Dichtung, insbesondere in Form einer Dichtlippe, aufweisen, die im montierten Zustand innen am Mantel anliegt. Der Mantel ist koaxial zur Längsmittelachse des Deckels am Deckel ausgebildet. Der Deckel lässt sich nur dann an das Filterelement ansetzen, wenn die Längsmittelachsen von Filterkörper und Deckel koaxial zueinander ausgerichtet sind und das Ausrichtelement mit der Ausrichtkontur in Eingriff steht. Letzteres ist insbesondere dann der Fall, wenn eine Längsmittelachse der Ausrichtkontur koaxial zur Längsmittelachse des Ausrichtelements ausgerichtet ist.

Eine andere vorteilhafte Ausführungsform schlägt vor, dass der Deckel und das Gehäuse so aufeinander abgestimmt sind, dass sich der Deckel zum Verschließen des Filteraufnahmeraums nur in einer vorbestimmten Drehlage zwischen Deckel und Gehäuse am Gehäuse festlegen lässt, in der die Deckelöffnung radial auf den Auslass ausgerichtet ist. Hierdurch wird zwischen Deckelöffnung und Auslass ein möglichst geringer Strömungswiderstand realisiert. Die gewünschte Abstimmung zwischen Deckel und Gehäuse kann beispielsweise dadurch erreicht werden, dass der Deckel beim Montieren am Gehäuse eine Endlage erreicht, in der die gewünschte Drehlage vorliegt. Dies kann insbesondere in Verbindung mit einem Bajonett-Verschluss zwischen Deckel und Gehäuse realisiert werden, wobei der Bajonett-Verschluss zweckmäßig einen die gewünschte Drehlage definierenden Endanschlag aufweist.

Das Gehäuse besitzt an einem axialen Ende des Filteraufnahmeraums eine Gehäuseöffnung, die mit Hilfe des Deckels verschließbar ist bzw. verschlossen ist. An diesem offenen Axialende des Filteraufnahmeraums kann am Gehäuse ein Deckekelbereich ausgebildet sein, der durch einen an die Gehäuseöffnung anschließenden Axialabschnitt des Gehäuses gebildet ist, in den der Deckel zum Verschließen der Gehäuseöffnung hineinragt. Besonders vorteilhaft ist eine Ausführungsform, bei welcher der Auslass in diesen Deckelbereich am Gehäuse ausgebildet ist, wobei der Auslass zur Axialrichtung des Filteraufnahmeraums geneigt ist. Denkbar sind beispielsweise Neigungswinkel zwischen einer Längsmittelachse des Auslasses und der Axialrichtung des Filteraufnahmeraums auf einer vom Filterelemente abgewandten Seite von maximal 125°. Im einfachsten Fall ist der Auslass im Wesentlichen senkrecht zur Axialrichtung orientiert, so dass der Neigungswinkel etwa 90° beträgt. Vorteilhaft für einen reduzierten Strömungswiderstand sind jedoch Neigungswinkel kleiner als 90°. Dabei kann der Auslass so orientiert sein, dass seine Längsmittelachse zur Längsmittelachse des Filteraufnahmeraums radial verläuft oder dazu versetzt ist.

Insbesondere kann der Austritt tangential an den Filteraufnahmeraum angeschlossen sein. Der Deckel kann insbesondere mit seinem Mantel im Deckelbereich einen Ringraum ausbilden, der radial zwischen dem Gehäuse und dem Mantel angeordnet ist und in Umfangsrichtung um den Mantel umläuft. Dieser Ringraum bildet ebenso wie ein vom Mantel des Deckels umschlossener Deckelinnenraum einen Bestandteil der Reinseite.

Das Gehäuse kann in einen Tank integriert sein, der einen Behälter zum Bevorraten der zu filternden Flüssigkeit, z.B. Kraftstoff, aufweist. Ein erfindungsgemäßer Tank, insbesondere Kraftstofftank, zeichnet sich dadurch aus, dass in den Tank eine Filtereinrichtung der vorstehend beschriebenen Art integriert ist, wobei das Gehäuse einen integralen Bestandteil des Behälters bildet.

Ein Filterelement, das für eine Filtereinrichtung der vorstehend beschriebenen Art geeignet ist, besitzt einen hohlzylindrischen Filterkörper, der einen Filterinnenraum umschließt und der ein von der zu filternden Flüssigkeit radial durchströmbares Filtermaterial aufweist. Ferner besitzt das Filterelement eine erste Endscheibe an einem ersten Axialende des Filterkörpers, die das Filtermaterial am ersten Axialende verschließt, sowie eine zweite Endscheibe an einem zweiten Axialende des Filterkörpers, die das Filtermaterial am zweiten Axialende verschließt. Die erste Endscheibe weist eine Scheibenöffnung auf, die zum Filterinnenraum offen ist. Bei einem Filterelement, das für eine Filtereinrichtung der vorstehend beschriebenen Art vorgesehen ist, ist die Scheibenöffnung bezüglich einer Längsmittelachse des Filterkörpers exzentrisch an der ersten Endscheibe angeordnet. Bei der erfindungsgemäßen Verwendung wird dieses Filterelement in einer Filtereinrichtung der vorstehend beschriebenen Art verwendet, und zwar so, dass die Scheibenöffnung von der Deckelöffnung weggerichtet versetzt ist. Mit anderen Worten, das Filterelement wird so in den Filteraufnahmeraum eingesetzt und darin so positioniert, dass die Scheibenöffnung von der Deckelöffnung weggerichtet zur Längsmittelachse des Filterelements versetzt an der ersten Endscheibe angeordnet ist.

Gemäß einer vorteilhaften Ausführungsform kann an der ersten Endscheibe eine Ausrichtkontur ausgebildet sein, die zum Ausrichten des Filterelements zu einem Deckel der Filtereinrichtung verwendbar ist. Optional kann die Ausrichtkontur an einem die Scheibenöffnung einfassenden Öffnungsrand ausgebildet sein. Zusätzlich oder alternativ kann die Ausrichtkontur an einem die Scheibenöffnung einfassenden, an der ersten Endscheibe ausgebildeten Innenkragen ausgebildet sein. Optional kann der Innenkragen von der ersten Endscheibe zum Filtermedium abstehen. Ferner kann der Innenkragen optional über an der ersten Endscheibe ausgebildete, radial verlaufende Stege an einem Außenkragen befestigt und abgestützt sein, der ebenfalls an der ersten Endscheibe ausgebildet ist und an dem der Filterkörper radial abgestützt ist. Zusätzlich oder alternativ kann die Ausrichtkontur zumindest eine axial verlaufende Nut aufweisen, die an der ersten Endscheibe, insbesondere am Öffnungsrand und/oder am Innenkragen, ausgebildet ist. Sofern mehrere axial verlaufende Nuten vorgesehen sind, sind diese entlang der Scheibenöffnung in der Umfangsrichtung verteilt an der ersten Endscheibe, insbesondere am Öffnungsrand und/oder am Innenkragen, ausgebildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Filtereinrichtung im Bereich einer ersten Endscheibe eines Filterelements,
- Fig. 2: eine Schnittansicht wie in Figur 1, jedoch in einer anderen Schnittebene,
- Fig. 3: eine geschnittene isometrische Ansicht eines Deckels der Filtereinrichtung,
- Fig. 4: eine isometrische Ansicht des Filterelements im Bereich der ersten Endscheibe,
- Fig. 5: eine isometrische Ansicht des gesamten Filterelements,
- Fig. 6: eine Draufsicht des Filterelements auf die erste Endscheibe,
- Fig. 7: eine teilweise geschnittene Seitenansicht des Filterelements entsprechend Schnittlinien VII in Figur 6.

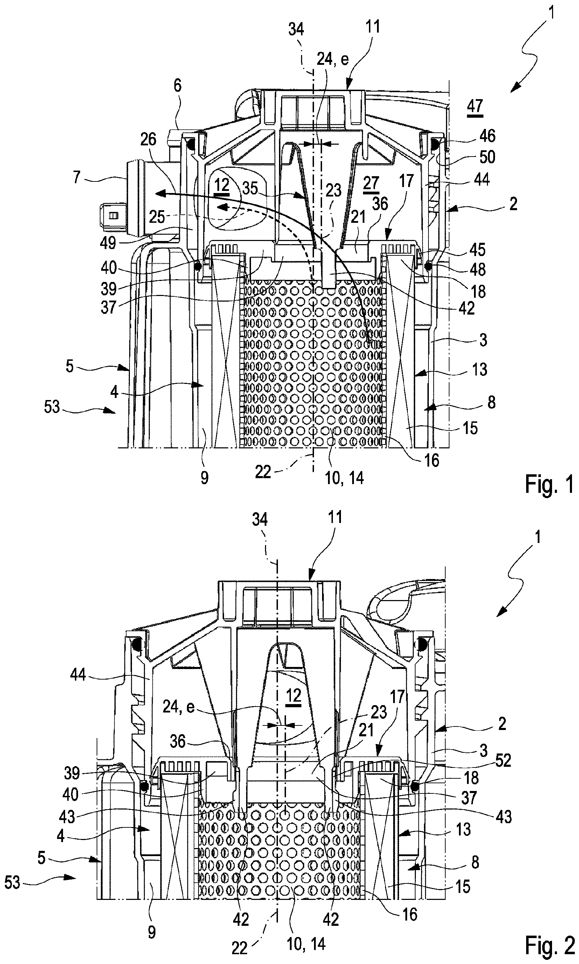

Entsprechend den Figuren 1 und 2 umfasst eine Filtereinrichtung 1, die sich zum Filtern einer Flüssigkeit eignet, ein Gehäuse 2, das einen Zylinderkörper 3 aufweist und das im Zylinderkörper 3 einen zylindrischen Filteraufnahmeraum 4 aufweist. Das Gehäuse 2 bzw. sein Zylinderkörper 3 kann dabei integraler Bestandteil eines Behälters 5 eines Tanks 53 sein, in dem die zu filternde Flüssigkeit bevorratet wird. Ein derartiger Tank 53 kommt beispielsweise dann zum Einsatz, wenn es sich bei der zu filternden Flüssigkeit um Kraftstoff handelt, wobei der Tank 53 dann ein Kraftstofftank ist und an einem Kraftfahrzeug angeordnet sein kann. Es ist jedoch klar, dass grundsätzlich auch andere Anwendungsformen für die hier vorgestellte Filtereinrichtung 1 denkbar sind. Das Gehäuse 2 weist außerdem einen Einlass 6 für ungefilterte Flüssigkeit und einen Auslass 7 für gefilterte Flüssigkeit auf.

Die Filtereinrichtung 1 weist außerdem ein Filterelement 8 auf, das in den Filteraufnahmeraum 4 austauschbar eingesetzt ist. Dabei trennt das Filterelement 8 im Filteraufnahmeraum 4 eine Rohseite 9, die mit dem Einlass 6 fluidisch verbunden ist, von einer Reinseite 10, die mit dem Auslass 7 fluidisch verbunden ist. Die Filtereinrichtung 1 weist ferner einen Deckel 11 auf, der am Gehäuse 2, insbesondere am Zylinderkörper 3, lösbar befestigt ist. Der Deckel 11 verschließt den Filteraufnahmeraum 4 axial und weist eine radiale Deckelöffnung 12 auf. Durch die Deckelöffnung 12 hindurch ist der Auslass 7 fluidisch mit der Reinseite 10 verbunden.

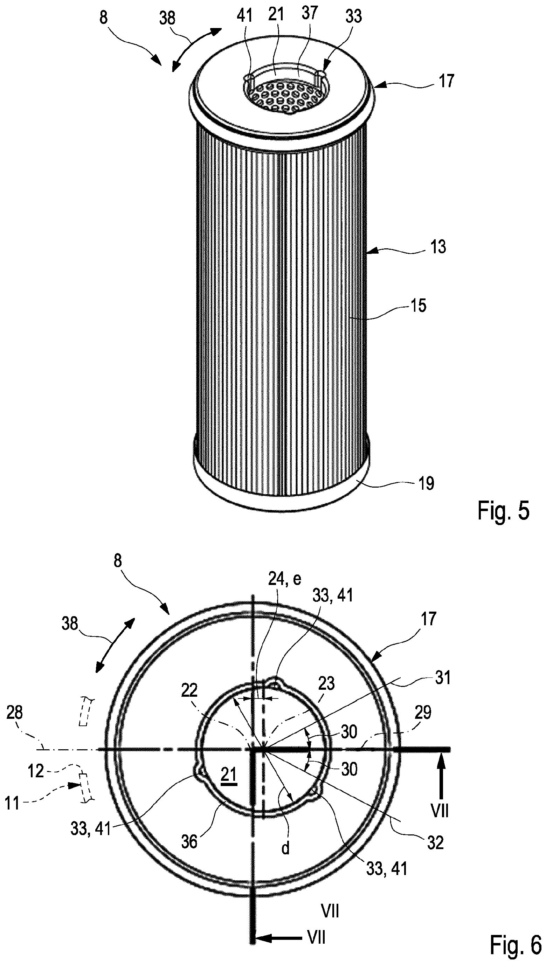

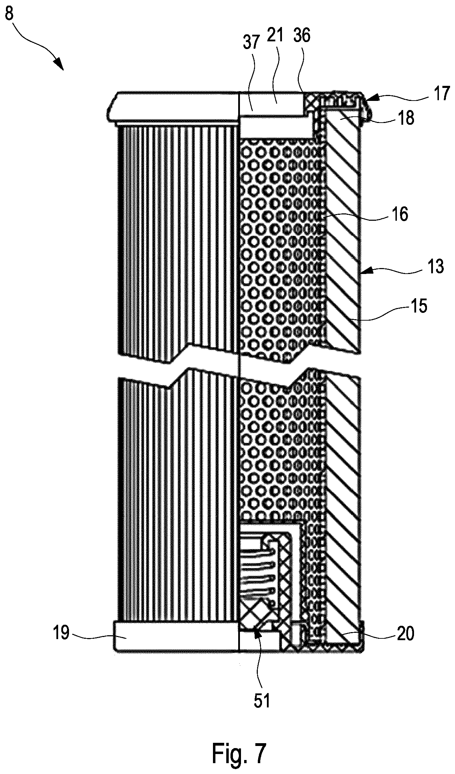

Gemäß den Figuren 1, 2 und 4 bis 7 weist das Filterelement 8 einen hohlzylindrischen Filterkörper 13 auf, der einen zur Reinseite 10 gehörenden Filterinnenraum 14 umschließt. Der Filterkörper 13 weist ein von der zu filternden Flüssigkeit durchströmbares Filtermaterial 15 auf, das insbesondere gefaltet bzw. plissiert sein kann. Im gezeigten Beispiel weist der Filterkörper 13 außerdem eine Innenzarge 16 auf, die ebenfalls von der zu filternden Flüssigkeit durchströmbar ist und an der sich das Filtermaterial 15 radial innen abstützt. Das Filterelement 8 weist ferner eine erste Endscheibe 17 auf, die an einem dem Deckel 11 zugewandten ersten Axialende 18 des Filterkörpers 13 angeordnet ist und dort insbesondere das Filtermaterial 15 axial verschließt. Gemäß den Figuren 5 und 7 weist das Filterelement 8 außerdem eine zweite Endscheibe 19 auf, die an einem vom Deckel 11 abgewandten zweiten Axialende 20 des Filterkörpers 13 angeordnet ist und insbesondere dort das Filtermaterial 15 axial verschließt.

Gemäß den Figuren 1, 2 und 4 bis 7 ist die erste Endscheibe 17 als offene Endscheibe ausgestaltet, sodass sie eine axiale Scheibenöffnung 21 aufweist, die zum Filterinnenraum 14 offen ist. In der Folge kann der Auslass 7 durch die Deckelöffnung 12 und durch die Scheibenöffnung 21 hindurch fluidisch mit dem Filterinnenraum 14 verbunden sein. Der zylindrische Filterkörper 13 definiert eine Längsmittelachse 22 für den Filterkörper 13 bzw. für das Filterelement 8. Beim hier vorgestellten Filterelement 8 bzw. bei der hier vorgestellten Filtereinrichtung 1 ist die Scheibenöffnung 21 an der ersten Endscheibe 17 bezüglich der Längsmittelachse 22 des Filterkörpers 13 bzw. des Filterelements 8 exzentrisch angeordnet. Demnach erstreckt sich die Längsmittelachse 22 des Filterelements 8 nicht mittig durch die axiale Scheibenöffnung 21, sondern versetzt gegenüber einer Mittelachse 23 der Scheibenöffnung 21, die sich parallel zur Längsmittelachse 22 zentral durch die Scheibenöffnung 21 erstreckt. Bei einer kreisförmigen Scheibenöffnung 21 erstreckt sich deren Mittelachse 23 durch den Mittelpunkt des Kreisquerschnitts der Scheibenöffnung 21. In den Figuren 1 und 2 ist ein Abstand 24 zwischen der Mittelachse 23 der Scheibenöffnung 21 und der Längsmittelachse 22 des Filterelements 8 eingetragen. Dieser Abstand 24 definiert den Versatz zwischen der Mittelachse 23 und der Längsmittelachse 22 und entspricht somit der Exzentrizität e der Scheibenöffnung 21 gegenüber der Längsmittelachse 22. Bei einer kreisförmigen Scheibenöffnung 21 besitzt diese einen Durchmesser d. Bevorzugt liegt die Exzentrizität e in einem Bereich von 5% bis 30%, so dass gilt: 0,05 ≤ *e*/*d* ≤ 0,3, vorzugsweise 0,1 ≤ *e*/*d* ≤ 0,2, insbesondere 0,1 ≤ *e*/*d* ≤ 0,15.

In Figur 1 ist mit unterbrochener Linie ein Strömungspfeil 25 eingetragen, der eine Hauptströmung vom Filterinnenraum 14 zur Deckelöffnung 12 während des Betriebs der Filtereinrichtung 1 symbolisiert. Mit durchgezogener Linie ist ein weiterer Strömungspfeil 26 eingetragen, der ebenfalls eine Hauptströmung vom Filterinnenraum 14 zur Deckelöffnung 12 während des Betriebs der Filtereinrichtung 1 symbolisiert. Die jeweilige Strömung 25, 26 strömt vom Filterinnenraum 14 zunächst durch die axiale Scheibenöffnung 21 in einen Deckelinnenraum 27 und von diesem zur radialen Deckelöffnung 12 und von dort zum Auslass 7. Erkennbar erfolgt hierbei eine Strömungsumlenkung um etwa 90°. Die mit unterbrochener Linie dargestellte Strömung 25 entsteht, wenn die Scheibenöffnung 21 gemäß einer herkömmlichen Bauweise in der ersten Endscheibe 17 zentral, also koaxial zur Längsmittelachse 22 des Filterelements 8 angeordnet ist. Die Strömungsumlenkung erfolgt dabei mit einem vergleichsweise kleinen mittleren Radius. Im Unterschied dazu repräsentiert der mit durchgezogener Linie gezeichnete Pfeil 26 die Strömung bei der hier vorgestellten Bauweise mit exzentrisch angeordneter Scheibenöffnung 21. Die Hauptströmung wird hierdurch versetzt, wodurch sich bei der Strömungsumlenkung der mittlere Radius vergrößert. Dies hat strömungstechnisch Vorteile. Insbesondere lässt sich der Durchströmungswiderstand der Filtereinrichtung 1 reduzieren.

Besonders zweckmäßig ist es dabei, wenn die Exzentrizität e der Scheibenöffnung 21 so gewählt ist, dass die Scheibenöffnung 21 von der Deckelöffnung 12 weggerichtet zur Längsmittelachse 22 des Filterelements 8 versetzt an der ersten Endscheibe 17 angeordnet ist. In der Folge ist dann die Längsmittelachse 22 geometrisch zwischen der Deckelöffnung 12 und der Mittelachse 23 der Scheibenöffnung 21 angeordnet.

In Figur 6 ist mit unterbrochener Linie ein Teilbereich des Deckels 11 angedeutet, in dem die Deckelöffnung 12 ausgebildet ist. Eine Mittelachse 28 der Deckelöffnung 12 schneidet die Längsmittelachse 22 des Filterelements 8. Ferner ist in Figur 6 eine Verbindungsgerade 29 eingetragen, die durch die Längsmittelachse 22 des Filterelements 8 und durch die Mittelachse 23 der Scheibenöffnung 21 verläuft, also beide Achsen 22, 23 schneidet. Diese Verbindungsgerade 29 weist gegenüber der Mittelachse 28 der Deckelöffnung 12 einen Exzenterwinkel 30 auf, der maximal 30° beträgt. Im Beispiel der Figur 6 beträgt der Exzenterwinkel 30 null Grad, also 0°. In Figur 6 sind die Bereichsgrenzen 31 und 32 jeweils durch Geraden eingezeichnet, die jeweils um den maximalen Exzenterwinkel 30 von 30° gegenüber der Mittelachse 28 der Deckelöffnung 12 geneigt sind. Innerhalb dieses, durch die Bereichsgrenzen 31 und 32 begrenzten Winkelbereichs verläuft die Verbindungsgerade 29 in einer bevorzugten Ausführungsform. Der maximale Exzenterwinkel 30 ist zweckmäßig kleiner als 30° und kann beispielsweise 20° oder 15° oder 10° oder 5° betragen. Bei der hier gezeigten Ausführungsform beträgt der Exzenterwinkel 30 exemplarisch null Grad, also 0°, sodass letztlich die Mittelachse 29 der Deckelöffnung 28 auch die Mittelachse 23 der Scheibenöffnung 21 schneidet.

Gemäß den Figuren 1 bis 7 kann an der ersten Endscheibe 17 eine Ausrichtkontur 33 ausgebildet sein, die dabei insbesondere bezüglich der Längsmittelachse 22 des Filterelements 8 exzentrisch angeordnet ist. Komplementär dazu weist der Deckel 11 ein Ausrichtelement 35 auf, das dabei insbesondere bezüglich einer Längsmittelachse 34 des Deckels 11 exzentrische angeordnet ist. Das Ausrichtelement 35 steht mit der Ausrichtkontur 33 in Eingriff und bewirkt dadurch eine koaxiale Ausrichtung zwischen Filterelement 8 und Deckel 11. Die koaxiale Ausrichtung zwischen Deckel 11 und Filterelement 8 bewirkt, dass die Längsmittelachse 22 des Filterelements 8 mit der Längsmittelachse 34 des Deckels 11 zusammenfällt. Des Weiteren wirken Ausrichtelement 35 und Ausrichtkontur 33 durch ihre exzentrische Anordnung so zusammen, dass sich eine vorbestimmte Drehlage zwischen Deckelöffnung 12 und Scheibenöffnung 21 einstellt. Insbesondere soll dadurch die Mittelachse 23 der Scheibenöffnung 21 in dem vorstehend zu Figur 6 erläuternden Bereich des Exzenterwinkels 30 liegen.

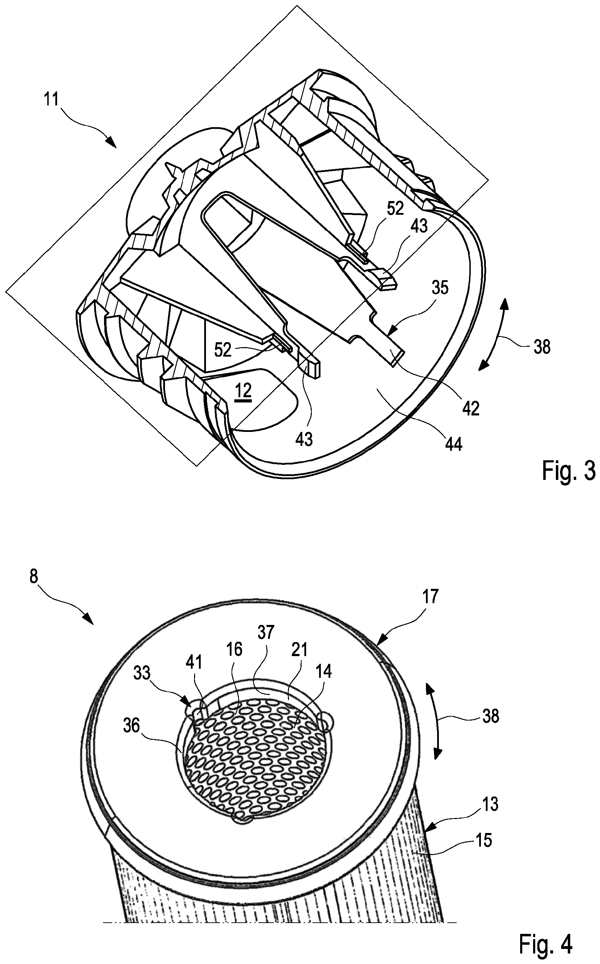

Die Ausrichtkontur 33 kann grundsätzlich an einer beliebigen Stelle der ersten Endscheibe 17 ausgebildet sein. Bevorzugt ist die Ausrichtkontur 33 jedoch an einem die Scheibenöffnung 21 einfassenden Öffnungsrand 36 ausgebildet. Für den Eingriff zwischen Ausrichtelement 35 und Ausrichtkontur 33 greift das Ausrichtelement 35 in die Scheibenöffnung 21 ein. Für eine verbesserte Ausrichtung kann die erste Endscheibe 17 einen die Scheibenöffnung 21 einfassenden Innenkragen 37 aufweisen, der am Öffnungsrand 36 axial in Richtung Filterinnenraum 14 absteht. Die Ausrichtkontur 33 ist dann zweckmäßig an diesem Innenkragen 37 ausgebildet. Der Innenkragen 37 kann gemäß den Figuren 1 und 2 über mehrere, in der Umfangsrichtung 38, die in den Figuren 3 bis 6 durch einen Doppelpfeil angedeutet ist, verteilt angeordnete, radial verlaufende Stege 39 an einem Außenkragen 40 befestigt und abgestützt sein. Der Außenkragen 40 ist ebenfalls an der ersten Endscheibe 17 ausgebildet und steht in Richtung Filterinnenraum 14 davon ab. Die Positionierung des Außenkragens 40 ist dabei so gewählt, dass sich der Filterkörper 13 radial innen an diesem Außenkragen 40 radial abstützt. Im konkreten Beispiel stützt sich die Innenzarge 16 radial am Außenkragen 40 ab.

Beim hier gezeigten Beispiel weist die Ausrichtkontur 33 mehrere axial verlaufende Nuten 41 auf, die entlang der Scheibenöffnung 21 in der Umfangsrichtung 38 verteilt an der ersten Endscheibe 17 ausgebildet sind. Das Ausrichtelement 35 weist passend dazu mehrere Ausrichtfinger 42 auf, die jeweils in eine dieser Nuten 41 eingreifen. Hierdurch wird durch die Ausrichtkontur 33 und das Ausrichtelement 35 eine Nut-Feder-Führung zwischen dem Filterelement 8 und dem Deckel 11 ausgebildet. Im gezeigten Beispiel sind die Nuten 41 symmetrisch in Umfangsrichtung 38 verteilt.

Gemäß den Figuren 1 bis 3 können die Ausrichtfinger 42 zweckmäßig als Rastelemente ausgestaltet sein, sodass der jeweilige Ausrichtfinger 42 an seinem freistehenden Ende eine Rastnase 43 aufweist. Beim Aufsetzen des Deckels 11 auf das Filterelement 8 muss zunächst eine Drehlage zwischen Deckel 11 und Filterelement 8 gefunden werden, bei welcher das Ausrichtelement 5 mit der Ausrichtkontur 33 in Eingriff kommen kann. Dann greifen die Ausrichtfinger 42 in die Nuten 41 ein. Dabei werden die als Rastelemente ausgebildeten Ausrichtfinger 42 federelastisch radial verformt, bis sie durch die Scheibenöffnung 21 bzw. durch den Innenkragen 37 vollständig hindurchgeführt sind. Danach können sich die Ausrichtfinger 42 wieder entspannen. Anschließend hintergreifen die Rastnasen 43 den Öffnungsrand 36 bzw. den Innenkragen 37. Hierdurch ist das Ausrichtelement 35 mit der ersten Endscheibe 17 verrastet. In der Folge ist der Deckel 11 durch diese Verrastung mit dem Filterelement 8 mechanisch verbunden. Beim Abnehmen des Deckels 11 vom Gehäuse 2 wird somit das Filterelement 8 aus dem Filteraufnahmeraum 4 herausgezogen.

Für den Eingriff des jeweiligen Ausrichtfingers 42 mit der zugehörigen Nut 41 ist an einer radial außenliegenden Außenseite des jeweiligen Ausrichtfingers 42 ein Axialsteg 52 ausgebildet, der in die Nut 41 eingreift und darin axial geführt ist.

Die Ausrichtkontur 33 ist zweckmäßig integral an der ersten Endscheibe 17 ausgeformt. Das Ausrichtelement 35 kann insbesondere integral am Deckel 11 ausgeformt sein.

Gemäß den Figuren 1 bis 3 kann der Deckel 11 einen zylindrischen Mantel 44 aufweisen, in dem die Deckelöffnung 12 ausgebildet ist und der beim Montieren des Deckels 11 am Gehäuse 2 in das Gehäuse 2 bzw. in den Zylinderkörper 3 eintaucht. Die erste Endscheibe 17 taucht ihrerseits koaxial in den Mantel 44 ein. An der ersten Endscheibe 17 ist integral eine Dichtlippe 45 ausgeformt, die innen am Mantel 44 radial anliegt und den Deckelinnenraum 27 dichtet. Am Mantel 44 ist eine Außendichtung 46 vorgesehen, die den Mantel 44 bzw. den Deckel 11 gegenüber dem Gehäuse 2 bzw. dem Zylinderkörper 3 dichtet. Die Abdichtung erfolgt hier gegenüber einer Umgebung 47 des Gehäuses 2. Des Weiteren ist am Mantel 44 beabstandet zur Außendichtung 46 eine Innendichtung 48 ausgebildet, die ebenfalls den Mantel 44 bzw. den Deckel 11 gegenüber dem Gehäuse 2 bzw. dem Zylinderkörper 3 abdichtet. Die Abdichtung erfolgt hierbei gegenüber der Rohseite 9. Radial zwischen dem Mantel 44 und dem Gehäuse 2 bzw. dem Zylinderkörper 3 ist ein Ringraum 49 ausgebildet, der mit der Deckelöffnung 12 und mit dem Auslass 7 fluidisch verbunden ist. Der Ringraum 49 zählt dadurch ebenfalls wie der Deckelinnenraum 27 zur Reinseite 10. Der Deckel 11 und Gehäuse 2 sind vorzugsweise so aufeinander abgestimmt, dass der Deckel 11 zum Verschließen des Filteraufnahmeraums 4 eine vorbestimmte Drehlage zwischen Deckel 11 und Gehäuse 2 definiert. Zum Beispiel erreicht der Deckel 11 bei Festlegen am Gehäuse 2 eine Endlage. Realisiert wird dies beispielsweise in Verbindung mit einem Bajonett-Verschluss, bei dem der Deckel 11 zunächst axial in eine Gehäuseöffnung 50 am offenen axialen Ende des Filteraufnahmeraums 4 eingesetzt wird und anschließend eine Drehverstellung bis zu einem Anschlag erfolgt, in dem dann die vorbestimmte Drehlage vorliegt. Der Auslass 7 befindet sich im Bereich des Deckels 11 bzw. im Bereich des Ringraums 49 und ist senkrecht zur Axialrichtung des Filterelements 8 bzw. des Filteraufnahmeraums 4 orientiert. Die Ausrichtung zwischen Deckel 11 und Gehäuse 2 erfolgt derart, dass die Deckelöffnung 12 in der vorbestimmten Drehlage radial auf den Auslass 7 ausgerichtet ist.

Gemäß Figur 7 kann die zweite Endscheibe 19 ein Überdrucköffnungsventil 51 aufweisen, das bei einer unzulässig hohen Druckdifferenz zwischen Rohseite 9 und Reinseite 10 einen Bypass zur Umgehung des Filterkörpers 13 öffnet, sodass die Flüssigkeit direkt von der Rohseite 9 durch das Überdrucköffnungsventil 51 in den Filterinnenraum 14 und somit auf die Reinseite 10 gelangt. Eine übermäßig hohe Druckdifferenz kann beispielsweise bei einem stark verschmutzten Filterelement 8 auftreten.

## Patentansprüche

1. Filtereinrichtung (1) zum Filtern einer Flüssigkeit,
- mit einem Gehäuse (2), das einen zylindrischen Filteraufnahmeraum (4), einen Einlass (6) für ungefilterte Flüssigkeit und einen Auslass (7) für gefilterte Flüssigkeit aufweist,
- mit einem Filterelement (8), das austauschbar in den Filteraufnahmeraum (4) eingesetzt ist und darin eine mit dem Einlass (6) fluidisch verbundene Rohseite (9) von einer mit dem Auslass (7) fluidisch verbundenen Reinseite (10) trennt,
- mit einem Deckel (11), der am Gehäuse (2) lösbar befestigt ist, der den Filteraufnahmeraum (4) axial verschließt und der eine radiale Deckelöffnung (12) aufweist, durch die hindurch der Auslass (7) fluidisch mit der Reinseite (10) verbunden ist,
- wobei das Filterelement (8) einen hohlzylindrischen Filterkörper (13) aufweist, der einen zur Reinseite (10) gehörenden Filterinnenraum (14) umschließt und der ein von der zu filternden Flüssigkeit durchströmbares Filtermaterial (15) aufweist,
- wobei der Filterkörper (13) eine Längsmittelachse (22) für den Filterkörper (13) und für das Filterelement (8) definiert,
- wobei das Filterelement (8) eine erste Endscheibe (17) aufweist, die an einem dem Deckel (11) zugewandten ersten Axialende (18) des Filterkörpers (13) angeordnet ist,
- wobei das Filterelement (8) eine zweite Endscheibe (19) aufweist, die an einem vom Deckel (11) abgewandten zweiten Axialende (20) des Filterkörpers (13) angeordnet ist,
- wobei die erste Endscheibe (17) eine axiale Scheibenöffnung (21) aufweist, die zum Filterinnenraum (14) offen ist, sodass der Auslass (7) durch die Deckelöffnung (12) und durch die Scheibenöffnung (21) hindurch fluidisch mit dem Filterinnenraum (14) verbunden ist,
**dadurch gekennzeichnet,**
- **dass** die Scheibenöffnung (21) an der ersten Endscheibe (17) bezüglich der Längsmittelachse (22) des Filterelements (8) exzentrisch angeordnet ist,
- **dass** die Scheibenöffnung (21) von der Deckelöffnung (12) weggerichtet zur Längsmittelachse (22) des Filterelements (8) versetzt an der ersten Endscheibe (17) angeordnet ist.

2. Filtereinrichtung (1) nach Anspruch 1,
**dadurch gekennzeichnet,**
- **dass** eine Mittelachse (28) der Deckelöffnung (12) die Längsmittelachse (22) des Filterelements (8) schneidet,
- **dass** eine Verbindungsgerade (29), die durch die Längsmittelachse (22) des Filterelements (8) und durch eine Mittelachse (23) der Scheibenöffnung (21) geht, gegenüber der Mittelachse (28) der Deckelöffnung (12) einen Exzenterwinkel (30) aufweist, der kleiner oder gleich 30° ist.

3. Filtereinrichtung (1) nach Anspruch 1 oder 2,
**dadurch gekennzeichnet,**
- **dass** an der ersten Endscheibe (17) eine Ausrichtkontur (33) ausgebildet ist,
- **dass** der Deckel (11) ein Ausrichtelement (35) aufweist, das mit der Ausrichtkontur (33) in Eingriff steht,
- **dass** die Ausrichtkontur (33) und das Ausrichtelement (35) so aufeinander abgestimmt sind, dass sie Deckel (11) und Filterelement (8) koaxial zueinander ausrichten und eine vorbestimmte Drehlage zwischen Deckelöffnung (12) und Scheibenöffnung (21) einstellen.

4. Filtereinrichtung (1) nach Anspruch 3,
**dadurch gekennzeichnet,**
- **dass** die Ausrichtkontur (33) bezüglich der Längsmittelachse (22) des Filterelements (8) exzentrisch an der ersten Endscheibe (17) angeordnet ist,
- **dass** das Ausrichtelement (35) bezüglich einer Längsmittelachse (34) des Deckels (11) exzentrisch am Deckel (11) angeordnet ist.

5. Filtereinrichtung (1) nach Anspruch 3 oder 4,
**dadurch gekennzeichnet,**
- **dass** die Ausrichtkontur (33) an einem die Scheibenöffnung (21) einfassenden Öffnungsrand (36) ausgebildet ist,
- **dass** das Ausrichtelement (35) zum Ausrichten des Filterelements (8) in die Scheibenöffnung (21) eingreift.

6. Filtereinrichtung (1) nach einem der Ansprüche 3 bis 5,
**dadurch gekennzeichnet,**
- **dass** die erste Endscheibe (17) einen die Scheibenöffnung (21) einfassenden Innenkragen (37) aufweist, an dem die Ausrichtkontur (33) ausgebildet ist.

7. Filtereinrichtung (1) nach Anspruch 6,
**dadurch gekennzeichnet,**
- **dass** der Innenkragen (37) von der ersten Endscheibe (17) zum Filterinnenraum (14) absteht,
- **dass** der Innenkragen (37) über an der ersten Endscheibe (17) ausgebildete, radial verlaufende Stege (39) an einem Außenkragen (40) befestigt und abgestützt ist, der an der ersten Endscheibe (17) ausgebildet ist und an dem der Filterkörper (13) radial abgestützt ist.

8. Filtereinrichtung (1) nach einem der Ansprüche 3 bis 7,
**dadurch gekennzeichnet,**
- **dass** die Ausrichtkontur (33) mindestens eine axial verlaufende Nut (41) aufweist, die an der ersten Endscheibe (17) ausgebildet ist,
- **dass** das Ausrichtelement (35) mindestens einen Ausrichtfinger (42) aufweist, der in die jeweilige Nut (41) eingreift.

9. Filtereinrichtung (1) nach Anspruch 8,
**dadurch gekennzeichnet,**
- **dass** der jeweilige Ausrichtfinger (42) als Rastelement ausgebildet ist und an seinem freistehenden Ende eine Rastnase (43) aufweist,
- **dass** der Deckel (11) durch das mit der ersten Endscheibe (17) verrastete Ausrichtelement (35) mit dem Filterelement (8) mechanisch verbunden ist, sodass beim Abziehen des Deckels (11) vom Gehäuse (2) das Filterelement (8) aus dem Filteraufnahmeraum (4) herausgezogen wird.

10. Filtereinrichtung (1) nach einem der Ansprüche 1 bis 9,
**dadurch gekennzeichnet,**
- **dass** der Deckel (11) einen zylindrischen Mantel (44) aufweist, der die Deckelöffnung (12) aufweist und der in das Gehäuse (2) eintaucht,
- **dass** die erste Endscheibe (17) koaxial in den Mantel (44) eintaucht.

11. Filtereinrichtung (1) nach einem der Ansprüche 1 bis 10,
**dadurch gekennzeichnet,**
- **dass** der Deckel (11) und das Gehäuse (2) so aufeinander abgestimmt sind,
- **dass** der Deckel (11) zum Verschließen des Filteraufnahmeraums (4) eine vorbestimmte Drehlage zwischen Deckel (11) und Gehäuse (2) am Gehäuse (2) definiert.

12. Filtereinrichtung (1) nach Anspruch 11,
**dadurch gekennzeichnet,**
- **dass** der Auslass (7) im Bereich des Deckels (11) am Gehäuse (2) angeordnet ist und zur Längsmittelachse (22) des Filterelements (8) geneigt ist,
- **dass** die Deckelöffnung (12) in der vorbestimmten Drehlage zwischen Deckel (11) und Gehäuse (2) radial auf den Auslass (7) ausgerichtet ist.

13. Verwendung eines Filterelements (8), umfassend
- einen hohlzylindrischen Filterkörper (13), der einen Filterinnenraum (14) umschließt und der ein von der zu filternden Flüssigkeit radial durchströmbares Filtermaterial (15) aufweist,
- eine erste Endscheibe (17) an einem ersten Axialende (18) des Filterkörpers (13), die das Filtermaterial (15) am ersten Axialende (18) verschließt und die eine zum Filterinnenraum (14) offene und bezüglich einer Längsmittelachse (22) des Filterelements (8) an der ersten Endscheibe (17) exzentrisch angeordnete Scheibenöffnung (21) aufweist, und
- eine zweite Endscheibe (19) an einem zweiten Axialende (20) des Filterkörpers (13), die das Filtermaterial (15) am zweiten Axialende (20) verschließt,
in einer Filtereinrichtung (1) nach einem der vorhergehenden Ansprüche, derart, dass die Scheibenöffnung (21) von der Deckelöffnung (12) weggerichtet versetzt ist.

14. Tank (53) zum Bevorraten einer Flüssigkeit,
- mit einem Behälter (5) zum Aufnehmen der Flüssigkeit,
- mit einer Filtereinrichtung (1) nach einem der Ansprüche 1 bis 12,
- wobei das Gehäuse (2) der Filtereinrichtung (1) in den Behälter (5) integriert ist.

## Claims

1. Filter device (1) for filtering a liquid,
- with a housing (2), which has a cylindrical filter mounting frame (4), an inlet (6) for unfiltered liquid and an outlet (7) for filtered liquid,
- with a filter element (8), which is inserted interchangeably in the filter mounting frame (4) and therein separates a dirty side (9) fluidically connected to the inlet (6) from a clean side (10) fluidically connected to the outlet (7),
- with a cover (11), which is detachably attached to the housing (2), which axially closes off the filter mounting frame (4) and which has a radial cover opening (12), through which the outlet (7) is fluidically connected to the clean side (10),
- wherein the filter element (8) has a hollow cylindrical filter body (13), which surrounds a filter interior (14) belonging to the clean side (10) and which has a filter material (15) through which the liquid to be filtered can flow,
- wherein the filter body (13) defines a longitudinal center axis (22) for the filter body (13) and for the filter element (8),
- wherein the filter element (8) has a first end plate (17), which is arranged on a first axial end (18) of the filter body (13) facing the cover (11),
- wherein the filter element (8) has a second end plate (19), which is arranged on a second axial end (20) of the filter body (13) facing away from the cover (11),
- wherein the first end plate (17) has an axial plate opening (21), which is open to the filter interior (14) such that the outlet (7) is fluidically connected to the filter interior (14) via the cover opening (12) and via the plate opening (21),
**characterized in that**
- the plate opening (21) is arranged eccentrically on the first end plate (17) relative to the longitudinal center axis (22) of the filter element (8),
- the plate opening (21) is arranged facing away from the cover opening (12) offset from the longitudinal center axis (22) of the filter element (8) on the first end plate (17).

2. Filter device (1) according to claim 1,
**characterized in that**
- a central axis (28) of the cover opening (12) intersects the longitudinal center axis (22) of the filter element (8),
- a straight connecting line (29), which passes through the longitudinal center axis (22) of the filter element (8) and through a central axis (23) of the plate opening (21), has an eccentric angle (30) relative to the central axis (28) of the cover opening (12), which is less than or equal to 30°.

3. Filter device (1) according to claim 1 or 2,
**characterized in that**
- an alignment contour (33) is formed on the first end plate (17),
- the cover (11) has an alignment element (35), which is in engagement with the alignment contour (33),
- the alignment contour (33) and the alignment element (35) are aligned such that they line up the cover (11) and filter element (8) coaxially to one another and set a predetermined rotational position between the cover opening (12) and plate opening (21).

4. Filter device (1) according to claim 3,
**characterized in that**
- the alignment contour (33) is arranged eccentrically on the first end plate (17) relative to the longitudinal center axis (22) of the filter element (8),
- the alignment element (35) is arranged eccentrically on the cover (11) relative to a longitudinal center axis (34) of the cover (11).

5. Filter device (1) according to claim 3 or 4,
**characterized in that**
- the alignment contour (33) is formed on an opening edge (36) surrounding the plate opening (21),
- the alignment element (35) engages in the plate opening (21) to align the filter element (8).

6. Filter device (1) according to any one of claims 3 to 5,
**characterized in that**
- the first end plate (17) has an inner collar (37) surrounding the plate opening (21), on which the alignment contour (33) is formed.

7. Filter device (1) according to claim 6,
**characterized in that**
- the inner collar (37) extends from the first end plate (17) to the filter interior (14),
- the inner collar (37) is attached and supported via a radially extending crosspiece (39) on an outer collar (40) formed on the first end plate (17), which is formed on the first end plate (17) and on which the filter body (13) is radially supported.

8. Filter device (1) according to any one of claims 3 to 7,
**characterized in that**
- the alignment contour (33) has at least one axially extending groove (41), which is formed on the first end plate (17),
- the alignment element (35) has at least one alignment finger (42), which engages in the respective groove (41).

9. Filter device (1) according to claim 8,
**characterized in that**
- the respective alignment finger (42) is formed as a latching element and has a latching lug (43) on its free end,
- the cover (11) is mechanically connected by the alignment element (35) latched with the first end plate (17) with the filter element (8) such that, when removing the cover (11) from the housing (2), the filter element (8) is extracted from the filter mounting frame (4).

10. Filter device (1) according to any one of claims 1 to 9,
**characterized in that**
- the cover (11) has a cylindrical casing (44), which has the cover opening (12) and is inserted in the housing (2),
- the first end plate (17) is inserted coaxially in the casing (44).

11. Filter device (1) according to any one of claims 1 to 10,
**characterized in that**
- the cover (11) and the housing (2) are aligned such that
- the cover (11) for closing off the filter mounting frame (4) defines a predetermined rotational position between the cover (11) and the housing (2) on the housing (2).

12. Filter device (1) according to claim 11,
**characterized in that**
- the outlet (7) is arranged in the area of the cover (11) on the housing (2) and is inclined towards the longitudinal center axis (22) of the filter element (8),
- the cover opening (12) is aligned radially with the outlet (7) in the predetermined rotational position between the cover (11) and the housing (2).

13. Use of a filter element (8), comprising
- a hollow cylindrical filter body (13), which surrounds a filter interior (14), and which has a filter material (15) through which the liquid to be filtered can flow radially,
- a first end plate (17) on a first axial end (18) of the filter body (13), which axially closes off the filter material (15) on the first axial end (18) and which has a plate opening (21) that is open to the filter interior (14) and is eccentrically arranged relative to a longitudinal center axis (22) of the filter element (8) on the first end plate (17), and
- a second end plate (19) on a second axial end (20) of the filter body (13), which closes off the filter material (15) on the second axial end (20),
in a filter device (1) according to any one of the preceding claims such that the plate opening (21) is offset facing away from the cover opening (12).

14. Tank (53) for stocking a liquid,
- with a container (5) for holding the liquid,
- with a filter device (1) according to any one of claims 1 to 12,
- wherein the housing (2) of the filter device (1) is integrated into the container (5).

## Revendications

1. Dispositif de filtre (1) pour filtrer un liquide,
- avec un boîtier (2) qui présente un espace de réception de filtre cylindrique (4), une entrée (6) pour le liquide non filtré et une sortie (7) pour le liquide filtré,
- avec un élément de filtre (8) qui est inséré de manière interchangeable dans l'espace de réception de filtre (4) et y sépare un côté brut (9) connecté par voie fluidique à l'entrée (6) d'un côté propre (10) connecté par voie fluidique à la sortie (7),
- avec un couvercle (11) qui est fixé de manière amovible au niveau du boîtier (2), qui ferme axialement l'espace de réception de filtre (4) et qui présente une ouverture de couvercle radiale (12) à travers laquelle la sortie (7) est connectée par voie fluidique au côté propre (10),
- dans lequel l'élément de filtre (8) présente un corps de filtre cylindrique creux (13) qui entoure un espace intérieur de filtre (14) appartenant au côté propre (10) et qui présente un matériau de filtre (15) pouvant être traversé par le liquide à filtrer,
- dans lequel le corps de filtre (13) définit un axe central longitudinal (22) pour le corps de filtre (13) et pour l'élément de filtre (8),
- dans lequel l'élément de filtre (8) présente un premier disque d'extrémité (17) qui est disposé au niveau d'une première extrémité axiale (18) du corps de filtre (13) tournée vers le couvercle (11),
- dans lequel l'élément de filtre (8) présente un second disque d'extrémité (19) qui est disposé au niveau d'une seconde extrémité axiale (20) du corps de filtre (13) opposée au couvercle (11),
- dans lequel le premier disque d'extrémité (17) présente une ouverture de disque axiale (21) qui est ouverte vers l'espace intérieur de filtre (14), de sorte que la sortie (7) soit connectée par voie fluidique à l'espace intérieur de filtre (14) à travers l'ouverture de couvercle (12) et à travers l'ouverture de disque (21),
**caractérisé en ce que**
- l'ouverture de disque (21) est disposée au niveau du premier disque d'extrémité (17) de manière excentrée par rapport à l'axe central longitudinal (22) de l'élément de filtre (8),
- **en ce que** l'ouverture de disque (21) est disposée au niveau du premier disque d'extrémité (17) en s'éloignant del'ouverture de couvercle (12) et de manière décalée par rapport à l'axe central longitudinal (22) de l'élément de filtre (8).

2. Dispositif de filtre (1) selon la revendication 1,
**caractérisé en ce que**
- un axe central (28) de l'ouverture de couvercle (12) coupe l'axe central longitudinal (22) de l'élément de filtre (8),
- une ligne droite de connexion (29), qui passe par l'axe central longitudinal (22) de l'élément de filtre (8) et par un axe central (23) de l'ouverture de disque (21), présente un angle excentrique (30) qui est inférieur ou égal à 30° par rapport à l'axe central (28) de l'ouverture de couvercle (12).

3. Dispositif de filtre (1) selon la revendication 1 ou 2,
**caractérisé en ce que**
- un contour d'alignement (33) est formé au niveau du premier disque d'extrémité (17),
- le couvercle (11) présente un élément d'alignement (35) qui est en prise avec le contour d'alignement (33),
- le contour d'alignement (33) et l'élément d'alignement (35) sont adaptés l'un à l'autre de sorte qu'ils alignent le couvercle (11) et l'élément de filtre (8) coaxialement l'un à l'autre et règlent une position de rotation prédéterminée entre l'ouverture de couvercle (12) et l'ouverture de disque (21).

4. Dispositif de filtre (1) selon la revendication 3,
**caractérisé en ce que**
- le contour d'alignement (33) est disposé de manière excentrée au niveau du premier disque d'extrémité (17) par rapport à l'axe central longitudinal (22) de l'élément de filtre (8),
- l'élément d'alignement (35) est disposé de manière excentrée au niveau du couvercle (11) par rapport à un axe central longitudinal (34) du couvercle (11).

5. Dispositif de filtre (1) selon la revendication 3 ou 4,
**caractérisé en ce que**
- le contour d'alignement (33) est formé au niveau d'un bord d'ouverture (36) entourant l'ouverture de disque (21),
- l'élément d'alignement (35) s'engage dans l'ouverture de disque (21) pour aligner l'élément de filtre (8).

6. Dispositif de filtre (1) selon l'une quelconque des revendications 3 à 5, **caractérisé en ce que**
- le premier disque d'extrémité (17) présente un col intérieur (37) entourant l'ouverture de disque (21), au niveau duquel le contour d'alignement (33) est formé.

7. Dispositif de filtre (1) selon la revendication 6,
**caractérisé en ce que**
- le col intérieur (37) fait saillie du premier disque d'extrémité (17) vers l'espace intérieur de filtre (14),
- le col intérieur (37) est fixé et supporté par l'intermédiaire de traverses (39) s'étendant radialement et formées au niveau du premier disque d'extrémité (17) sur un col extérieur (40) qui est formé au niveau du premier disque d'extrémité (17) et au niveau duquel le corps de filtre (13) est supporté radialement.

8. Dispositif de filtre (1) selon l'une quelconque des revendications 3 à 7, **caractérisé en ce que**
- le contour d'alignement (33) présente au moins une rainure (41) s'étendant axialement qui est formée au niveau du premier disque d'extrémité (17),
- l'élément d'alignement (35) présente au moins un doigt d'alignement (42) qui s'engage dans la rainure (41) respective.

9. Dispositif de filtre (1) selon la revendication 8,
**caractérisé en ce que**
- le doigt d'alignement (42) respectif est conçu en tant qu'élément d'encliquetage et présente un nez d'encliquetage (43) au niveau de son extrémité libre,
- le couvercle (11) est connecté mécaniquement à l'élément de filtre (8) par l'intermédiaire de l'élément d'alignement (35) encliqueté avec le premier disque d'extrémité (17), de sorte que lors de l'extraction du couvercle (11) du boîtier (2), l'élément de filtre (8) est extrait de l'espace de réception de filtre (4).

10. Dispositif de filtre (1) selon l'une quelconque des revendications 1 à 9, **caractérisé en ce que**
- le couvercle (11) présente une gaine cylindrique (44) qui présente l'ouverture de couvercle (12) et qui s'enfonce dans le boîtier (2),
- le premier disque d'extrémité (17) s'enfonce coaxialement dans la gaine (44).

11. Dispositif de filtre (1) selon l'une quelconque des revendications 1 à 10, **caractérisé en ce que**
- le couvercle (11) et le boîtier (2) sont adaptés l'un à l'autre de sorte que
- le couvercle (11) définit une position de rotation prédéterminée entre le couvercle (11) et le boîtier (2) au niveau du boîtier (2) pour la fermeture de l'espace de réception de filtre (4).

12. Dispositif de filtre (1) selon la revendication 11,
**caractérisé en ce que**
- la sortie (7) est disposée dans la zone du couvercle (11) au niveau du boîtier (2) et est inclinée par rapport à l'axe central longitudinal (22) de l'élément de filtre (8),
- l'ouverture de couvercle (12) est orientée radialement vers la sortie (7) dans la position de rotation prédéterminée entre le couvercle (11) et le boîtier (2).

13. Utilisation d'un élément de filtre (8), comprenant
- un corps de filtre cylindrique creux (13) qui renferme un espace intérieur de filtre (14) et qui présente un matériau de filtre (15) pouvant être traversé radialement par le liquide à filtrer,
- un premier disque d'extrémité (17) au niveau d'une première extrémité axiale (18) du corps de filtre (13), qui ferme le matériau de filtre (15) au niveau de la première extrémité axiale (18) et qui présente une ouverture de disque (21) ouverte vers l'espace intérieur de filtre (14) et disposée de manière excentrée par rapport à un axe central longitudinal (22) de l'élément de filtre (8) au niveau du premier disque d'extrémité (17), et
- un second disque d'extrémité (19) au niveau d'une seconde extrémité axiale (20) du corps de filtre (13), qui ferme le matériau filtrant (15) au niveau de la seconde extrémité axiale (20),
dans un dispositif de filtre (1) selon l'une quelconque des revendications précédentes, de sorte que l'ouverture de disque (21) soit décalée par rapport à l'ouverture de couvercle (12).

14. Réservoir (53) pour le stockage d'un liquide,
- avec un récipient (5) pour recevoir le liquide,
- avec un dispositif de filtre (1) selon l'une quelconque des revendications 1 à 12,
- dans lequel le boîtier (2) du dispositif de filtre (1) est intégré dans le récipient (5).
